# EUROPÄISCHE PATENTSCHRIFT

(11) **EP 1 784 326 B1**
(45) Veröffentlichungstag und Bekanntmachung des Hinweises auf die Patenterteilung: **01.09.2010**
(21) Anmeldenummer: 05749722.4
(22) Anmeldetag: 03.06.2005
(51) Int. Cl.: B60T 8/00

(54) **VERFAHREN ZUR UNTERSTÜTZUNG DES FAHRERS EINES KFZ BEI SCHLINGERNDEM ANHÄNGER**
METHOD FOR ASSISTING A MOTOR VEHICLE DRIVER IN CASE THE TRAILER SKIDS
PROCEDE POUR ASSISTER LE CONDUCTEUR D'UN VEHICULE AUTOMOBILE EN CAS DE PRISE DE ROULIS DU VEHICULE TRACTE

(30) Priorität: 10.07.2004 DE 102004033474
(43) Veröffentlichungstag der Anmeldung: 16.05.2007
(73) Patentinhaber: ROBERT BOSCH GMBH, 70442 Stuttgart (DE)
(72) Erfinder: TRAECHTLER, Ansgar, 71254 Ditzingen-Hirschlanden (DE)
(86) Internationale Anmeldenummer: PCT/EP2005/052554
(87) Internationale Veröffentlichungsnummer: WO 2006/005652

(56) Entgegenhaltungen:
- EP-A- 0 798 615
- DE-A1- 10 215 617
- DE-A1- 10 225 120
- US-B1- 6 600 974

## Beschreibung

Die Erfindung betrifft ein Verfahren zur Unterstützung des Fahrers eines Kfz bei schlingerndem Anhänger gemäß dem Oberbegriff des Patentanspruchs 1, sowie eine entsprechende Vorrichtung gemäß dem Oberbegriff des Patentanspruchs 7.

Bei einem Fahrzeug mit Anhänger können bei zu hohen Geschwindigkeiten Pendelschwingungen des Anhängers um die Hochachse auftreten. Diese Pendelschwingungen treten üblicherweise erst ab einer sogenannten kritischen Geschwindigkeit auf, die insbesondere von den konstruktiven Eigenschaften und der Beladung des Anhängers abhängt. Oberhalb der kritischen Geschwindigkeit ist das Gespann instabil.

Aus der DE 102 25 120 A1 ist ein Verfahren zur Überwachung von Kraftfahrzeugen mit Anhängern auf Instabilitäten bekannt, bei dem die von dem Fahrzeug und/oder Anhänger ausgeführten Schlingerbewegungen mit mindestens einem Querbeschleunigungssensor oder Raddrehzahlsensoren gemessen und zum Ermitteln von Regelgrößen für ein Regelsystem ausgewertet werden. Dabei ist vorgesehen, dass auf Basis von Messgrößen, die mit Hilfe des Querbeschleunigungssensors oder der Raddrehzahlsensoren und mindestens einem Zähler ermittelt wurden und die die positive und negative Amplitude sowie die halbe Periodendauer wiedergeben, unter Einbeziehung mindestens eines Bandes für die halbe oder ganze Periodendauer, die Schwingungsbreite mit einem Schwellenwert verglichen und das Vergleichsergebnis zur Erkennung von Schlingerbewegungen ausgewertet wird.

Aus der DE-10031266 ist es bekannt, Pendelschwingungen des Anhängers durch Auswertung von Sensorinformationen zu erkennen und bei Vorliegen einer kritischen Anhängerschwingung die Fahrzeug- oder Anhängerbremsen automatisch, d.h. ohne Zutun des Fahrers, zu betätigen. Die Räder des Fahrzeugs oder Anhängers können dabei sowohl symmetrisch (rechts und links gleich stark) als auch individuell abgebremst werden. Darüber hinaus ist es bekannt, eine Anhängerschwingung mit Hilfe automatischer Lenkeingriffe in eine aktive Vorder- oder Hinterachslenkung zu dämpfen. Zur Situationserkennung werden dabei üblicherweise mehrere Fahrzustandsgrößen, wie z.B. die Querbeschleunigung oder die Gierrate des Fahrzeugs ausgewertet. Bei den genannten Verfahren wird ein Bremseingriff grundsätzlich dann ausgeführt, wenn eine kritische Fahrsituation erkannt worden ist und ein Anhänger angekoppelt ist.

Problematisch ist hierbei insbesondere die Anhängererkennung. Es ist z.B. bekannt, einen Anhänger durch Auswertung des elektrischen Anhängeranschlusses zu erkennen. Nicht alle Anhängertypen verfügen jedoch über einen elektrischen Anschluss und können dadurch erkannt werden. Darüber hinaus könnte auch ein elektrischer Defekt im elektrischen System des Anhängers zu einer Fehlerkennung führen. In diesem Fall würde die automatische Stabilisierungsfunktion einen Bremsvorgang durchführen, auch wenn kein Anhänger vorhanden ist bzw. keinen Bremsvorgang durchführen, obwohl ein Anhänger vorhanden ist.

Es ist daher die Aufgabe der vorliegenden Erfindung, den Fahrer in einer kritischen Fahrsituation bei der Fahrzeugstabilisierung zu unterstützen und dabei fehlerhafte Bremseingriffe zu vermeiden.

Gelöst wird diese Aufgabe gemäß der Erfindung durch die im Patentanspruch 1 sowie im Patentanspruch 5 angegebenen Merkmale. Weitere Ausgestaltungen der Erfindung sind Gegenstand von Unteransprüchen.

Ein wesentlicher Aspekt der Erfindung besteht darin, den Bremseneingriff bei Erkennen einer kritischen Fahrsituation nicht unmittelbar durchzuführen, sondern den Fahrer zunächst nur zu informieren, dass ein kritisches Schlingern des Fahrzeuganhängers vorherrscht, um den Fahrer zu einer Bremsung zu veranlassen. Sofern der Fahrer danach eine Bremsung einleitet, wird der Fahrer beim Bremsvorgang unterstützt, indem an den Fahrzeugbremsen automatisch ein Bremsdruck eingestellt wird, mit dem eine Fahrzeugverzögerung, insbesondere eine optimale oder möglichst optimale Fahrzeugverzögerung, zum Zwecke der Stabilisierung des Anhängers erreicht wird. War die Bremsbetätigung des Fahrers beispielsweise zu schwach, wird der Bremsdruck automatisch auf einen fahrsituationsabhängigen optimalen Wert erhöht. War die Betätigung des Bremspedals dagegen zu stark, wird der Bremsdruck automatisch begrenzt. Ein derartiges Verfahren bzw. ein entsprechendes Fahrer-Unterstützungssystem hat den wesentlichen Vorteil, dass eine automatische Stabilisierung nur dann durchgeführt wird, wenn vom Fahrer bereits eine Bremsung eingeleitet wurde. Fehlerhafte Bremseingriffe, insbesondere wenn gar kein Anhänger angekoppelt ist, werden dadurch vermieden.

Der in der Stabilisierungsphase eingestellte Bremsdruck ist vorzugsweise abhängig vom Fahrervordruck (d.h. von den vom Fahrer ausgeübten Bremsdruck) und/oder vom Gradienten des Fahrervordrucks. Der automatisch eingestellte Bremsdruck ist darüber hinaus vorzugsweise abhängig von der Fahrsituation, insbesondere der Fahrzeuggeschwindigkeit, der Querbeschleunigung und/oder der Gierrate des Fahrzeugs. Der Stabilisierungseingriff kann somit optimal an die Fahrsituation und an den Fahrerwunsch angepasst werden.

Die Art und Weise der Fahrerunterstützung kann je nach Fahrsituation unterschiedlich sein. In Fahrsituationen, in denen die Schwingung des Anhängers unkritisch ist, wird vorzugsweise keine Aktion durchgeführt. Wenn die Stärke der Schwingungen innerhalb eines vorgegebenen Bereichs liegt, kann z.B. ein Warnhinweis an den Fahrer ausgegeben und der Fahrer, sofern er eine Bremsung einleitet, bei der Stabilisierung des Fahrzeugs unterstützt werden. Sofern das Stabilisierungssystem eine starke Schwingung des Anhängers erkennt, wird vorzugsweise unmittelbar eine automatische Bremsung eingeleitet. Eine falsche Reaktion des Fahrers, bei der der Fahrer beispielsweise beschleunigt, um das Fahrzeug zu stabilisieren, anstatt kräftig zu bremsen, wird dadurch verhindert.

Zur Erkennung einer Pendelbewegung des Anhängers wird vorzugsweise die Giergeschwindigkeit und/oder die Querbeschleunigung des Fahrzeugs (unter Berücksichtigung des Fahrerwunsches) ausgewertet. Entsprechende Sensoren sind bei herkömmlichen Fahrdynamikregelungen bereits von Haus aus vorhanden. Auf diese kann seitens des Fahrer-Unterstützungssystems zurückgegriffen werden.

Das erfindungsgemäße Verfahren zur Unterstützung des Fahrers und Stabilisierung des Fahrzeugs wird vorzugsweise nur oberhalb einer vorgegebenen Geschwindigkeitsschwelle durchgeführt.

Eine Vorrichtung zur Unterstützung des Fahrers bei schlingerndem Anhänger umfasst vorzugsweise ein Steuergerät mit einer daran angeschlossenen Sensorik zur Erkennung einer Schlingerbewegung des Anhängers, eine Einrichtung zur Warnung des Fahrers, die in Abhängigkeit vom Fahrzustand vom Steuergerät angesteuert wird, sowie ein aktives Bremssystem. Für den Fall, dass der Fahrer aufgrund des Warnhinweises eine Bremsung einleitet, ermittelt das Steuergerät einen Soll-Bremsdruck (oder eine Proportionale Größe), mit dem eine Fahrzeugverzögerung, insbesondere eine optimale oder möglichst optimale Fahrzeugverzögerung, zum Zwecke der Stabilisierung des Fahrzeugs erreicht werden kann. Dieser Soll-Bremsdruck wird dann durch entsprechende Ansteuerung des aktiven Bremssystems, wie z.B. des Hydroaggregats eines Fahrdynamikregelungssystems, vom Steuergerät eingestellt.

Die Erfindung wird nachstehend anhand der beigefügten Zeichnungen beispielhaft näher erläutert. Es zeigen:
Fig. 1 eine Blockdarstellung der wesentlichen Verfahrenszustände eines Stabilisierungsverfahrens gemäß einer ersten Ausführungsform der Erfindung;
Fig. 2 den Verlauf des Rad-Bremsdrucks in Abhängigkeit von der Fahrervorgabe;
Fig. 3 eine Blockdarstellung der wesentlichen Verfahrenszustände eines Stabilisierungsverfahrens gemäß einer zweiten Ausführungsform der Erfindung; und
Fig. 4 eine schematische Darstellung einer Vorrichtung zur Unterstützung des Fahrers bei schlingerndem Anhänger.

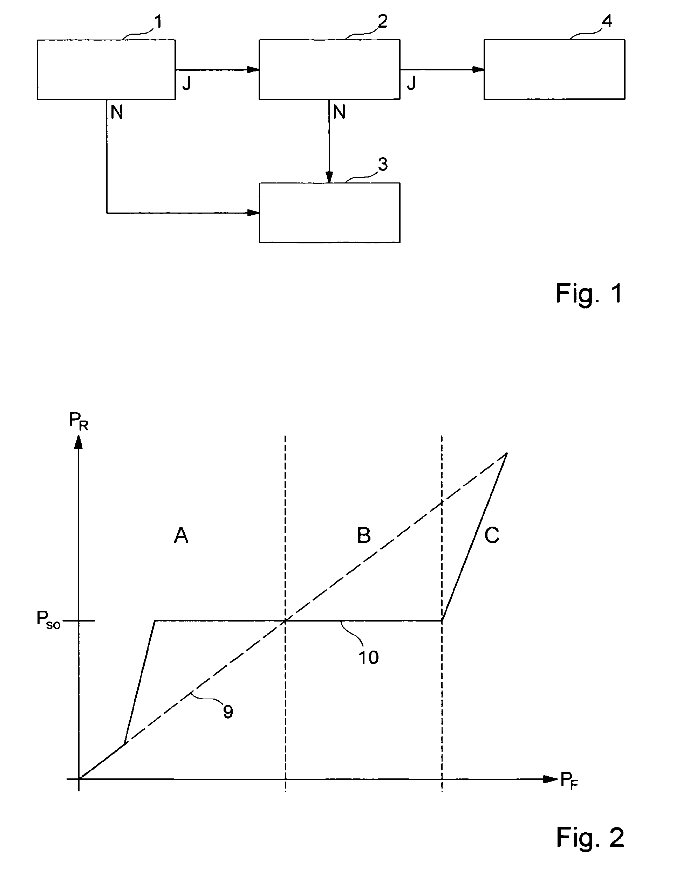

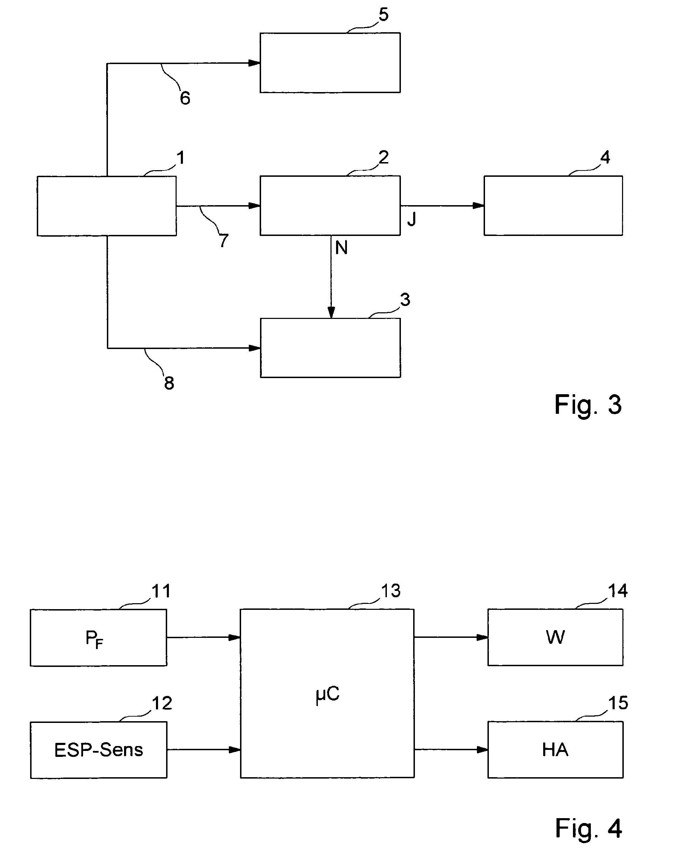

Fig. 1 zeigt eine schematische Darstellung der wesentlichen Verfahrenszustände eines Stabilisierungsverfahrens zur Unterstützung des Fahrers bei schlingerndem Anhänger. Block 1 repräsentiert dabei den Zustand "Situationserkennung", der von einer entsprechenden Elektronik, wie z.B. einem Steuergerät 13 (siehe Fig. 4), ausgeführt wird. Dabei werden insbesondere Signale, die die Querdynamik des Fahrzeugs beschreiben, wie z.B. die Querbeschleunigung oder die Gierrate, verarbeitet und ausgewertet. Die zugehörige Sensorik ist in Fig. 4 mit dem Bezugszeichen 12 bezeichnet. Zur Situationserkennung kann z.B. die ohnehin bereits vorhandene ESP-Sensorik genutzt werden. Zur Erkennung, ob überhaupt ein Anhänger angekoppelt ist, kann optional der elektrische Anhängeranschluss ausgewertet werden.

Eine kritische Anhängerschwingung wird erkannt, wenn die überwachten Fahrzustandsgrößen eine vorgegebene Bedingung erfüllen, z.B. die Gierrate oder die Fahrzeug-Querbeschleunigung vorgegebene Schwellenwerte überschreiten. In diesem Fall wird der Fahrer in Block 2 optisch oder akustisch gewarnt und dazu aufgefordert, einen Bremsvorgang einzuleiten. Sofern die überwachten Größen die vorgegebene Bedingung nicht erfüllen, wird keine weitere Aktion durchgeführt, wobei der Zustand 3 eingenommen wird.

Nach der Ausgabe einer Fahrerwarnung in Zustand 2 kann nun der Fahrer selbst entscheiden, ob er bremsen will oder nicht.

Falls der Fahrer nicht bremst (Fall N) geht das Verfahren in den Zustand 3 über und es erfolgt keine weitere Aktion. Bremst der Fahrer dagegen (Fall J) wird der Fahrer in Zustand 4 durch einen automatischen Bremseneingriff bei der Stabilisierung des Fahrzeugs unterstützt. Die Stärke des automatischen Bremseneingriffs ist dabei insbesondere abhängig von der Fahrsituation, d.h. der Fahrzeuggeschwindigkeit und der Stärke des Schlingerns, sowie vorzugsweise auch von der Stärke der Bremsbetätigung (Fahrervordruck) oder der Anstiegsgeschwindigkeit des Fahrervordrucks.

Fig. 2 zeigt mit der Kurve 10 beispielhaft einen an einem Rad eingestellten Rad-Bremsdruck P_{R} für eine vorgegebene Fahrsituation in Abhängigkeit vom Fahrervordruck p_{F}. In einem ersten Abschnitt des Bereichs A mit sehr niedrigeren Vordrücken (der Fahrer betätigt die Bremse nur relativ schwach) erfolgt keine automatische Fahrerunterstützung, so dass der Rad-Bremsdruck P_{R} dem Fahrer-Vordruck p_{F} (Kurve 9) entspricht. Mit zunehmendem Vordruck P_{F} wird dann durch automatische Ansteuerung des Hydroaggregats 15 ein Soll-Bremsdruck pₛₒ an den Radbremsen eingestellt, der vom Steuergerät 13 situationsabhängig berechnet wurde. Bremst der Fahrer zu schwach (Bereich A) wird der Rad-Bremsdruck P_{R} entsprechend erhöht, bremst der Fahrer dagegen zu stark (Bereich B) wird der Rad-Bremsdruck P_{R} auf den Sollwert p_{So} begrenzt. Bei sehr hohen Fahrer-Vordrücken P_{F} wird vorzugsweise keine automatische Begrenzung durchgeführt, um dem Fahrer ein Überbremsen des Fahrzeugs zu ermöglichen. Der Rad-Bremsdruck P_{R} (Kurve 10) entspricht in diesem Bereich C wiederum dem Fahrerwunsch (Kurve 9). Es sind auch andere Kennlinien denkbar; insbesondere können einer oder mehrere der Bereiche A, B, C auch die Breite 0 haben.

Fig. 3 zeigt die wesentlichen Verfahrenszustände eines Verfahrens zur Unterstützung des Fahrers bei schlingerndem Anhänger gemäß einer anderen Ausführungsform der Erfindung.

Die Zustände 1-4 entsprechen dabei den Zuständen 1-4 von Fig. 1, weshalb bezüglich der Erläuterung auf die Beschreibung zu Fig. 1 verwiesen wird. Im Unterschied zum Verfahren von Fig. 1 werden hier in Abhängigkeit von der Stärke der Anhängerschwingung unterschiedliche Stabilisierungsmaßnahmen eingeleitet. Wird im Zustand 1 (Situationserkennung) erkannt, dass der Anhänger nicht schwingt (siehe Pfeil 8), wird keine weitere Aktion durchgeführt und das Verfahren geht über in Zustand 3. Bei mäßiger Schwingung (Pfeil 7) wird dem Fahrer wiederum ein optischer oder akustischer Warnhinweis mitgeteilt, um den Fahrer zur Bremsung zu veranlassen. Bei starker Schwingung (Pfeil 6) wird das Fahrzeug dagegen unmittelbar, unabhängig vom Zutun des Fahrers, durch einen automatischen Bremseneingriff stabilisiert (Zustand 5). Dieser automatische Bremseneingriff 5 ist wiederum abhängig von der Fahrsituation (z.B. der Fahrzeuggeschwindigkeit und der Stärke der Schwingung) und wird vom Steuergerät 13 gesteuert.

Fig. 4 zeigt eine Blockdarstellung der wesentlichen Elemente einer Vorrichtung zur Stabilisierung eines Fahrzeugs bei schlingerndem Anhänger. Diese umfasst ein Steuergerät 13 mit einer daran angeschlossenen Sensorik 12, das eine kritische Fahrsituation durch Auswertung der Sensorsignale erkennt. Die Sensorik 12 umfasst z.B. einen Gierratensensor und/oder einen Querbeschleunigungssensor.

Zur Warnung des Fahrers ist eine optische oder akustische Warneinrichtung 14 vorgesehen, die vom Steuergerät 13 aktiviert werden kann. Eine Bremsbetätigung durch den Fahrer wird mittels eines Bremspedalsensors 11 erkannt, der ebenfalls am Steuergerät 13 angeschlossen ist. Das Steuergerät 13 ist ferner mit einem aktiven Bremssystem 10, wie z.B. einem bekannten ESP-Hydroaggregat, verbunden, das vom Steuergerät 13 nach Wunsch elektrisch angesteuert werden kann, um den Fahrer bei der Stabilisierung des Fahrzeugs zu unterstützen. Das Steuergerät umfasst einen Algorithmus, mit dem das vorstehend beschriebene Verfahren durchgeführt werden kann.

### Bezugszeichenliste

- 1: Situationserkennung
- 2: Fahrerwarnung
- 3: Keine Aktion
- 4: Fahrerunterstützung
- 5: Automatischer Bremseneingriff
- 6: Starke Schwingung
- 7: Mäßige Schwingung
- 8: Keine Schwingung
- 9: Rad-Bremsdruck ohne Unterstützung
- 10: Rad-Bremsdruck mit Fahrerunterstützung
- 11: Bremspedalsensor
- 12: ESP-Sensorik
- 13: Steuergerät
- 14: Anzeigeeinrichtung
- 15: Hydroaggregat
- A: geringer Vordruck
- B: mittlerer Vordruck
- C: hoher Vordruck
- vFz: Fahrzeuggeschwindigkeit
- vGi: Giergeschwindigkeit
- ay: Querbeschleunigung

## Patentansprüche

1. Verfahren zur Unterstützung des Fahrers eines Kraftfahrzeugs bei schlingerndem Anhänger, wobei eine Schwingung des Anhängers durch Auswertung wenigstens einer Fahrzustandsgröße (vFz,ay,vGi) erkannt wird,
**gekennzeichnet durch** folgende mittels eines Algorithmus in einem Steuergerät durchgeführte Schritte:
- Ausgabe (2) eines Warnhinweises an den Fahrer bei Erkennen einer kritischen Schwingung, um den Fahrer zu einer Bremsung zu veranlassen,
- Überwachen (3) einer vom Fahrer ausgeübten Bremsbetätigung, und
- Unterstützen (4) des Fahrers, sofern er eine Bremsung einleitet, beim **durch** den Fahrer eingeleiteten Bremsvorgang durch automatisches Betätigen der Fahrzeugbremsen (10), wobei ein Bremsdruck (Pso) ausgeübt wird, mit dem eine Fahrzeugverzögerung zum Zwecke der Stabilisierung des Anhängers erreicht wird,
- wobei der zur Unterstützung (4) des Fahrers automatisch eingestellte Bremsdruck (Pso) in Abhängigkeit vom Fahrervordruck und/oder vom Gradienten des Fahrervordrucks ermittelt wird.

2. Verfahren nach Anspruch 1, **dadurch gekennzeichnet, dass** der zur Unterstützung (4) des Fahrers automatisch eingestellte Bremsdruck (Pso) in Abhängigkeit von der Fahrsituation (vFz,ay,vGi), vorzugsweise der Fahrzeuggeschwindigkeit oder der Stärke der Anhängerschwingung ermittelt wird.

3. Verfahren nach einem der vorhergehenden Ansprüche, **dadurch gekennzeichnet, dass** in Abhängigkeit von der Stärke der Schwingung des Anhängers entweder keine Aktion (3) durchgeführt, ein Warnhinweis (2) an den Fahrer ausgegeben oder sofort eine automatische Bremsung (5) eingeleitet wird.

4. Verfahren nach einem der vorhergehenden Ansprüche, **dadurch gekennzeichnet, dass** zum Erkennen (1) einer Anhängerschwingung die Giergeschwindigkeit (vGi) und/oder die Querbeschleunigung des Fahrzeugs ausgewertet werden.

5. Verfahren nach einem der vorhergehenden Ansprüche, **dadurch gekennzeichnet, dass** das Verfahren nur oberhalb einer vorgegebenen Geschwindigkeitsschwelle (vFz) durchgeführt wird.

6. Vorrichtung zur Unterstützung des Fahrers eines Kraftfahrzeugs bei schlingerndem Anhänger, enthaltend
- eine Sensorik (12) zum Erkennen (1) einer Anhängerschwingung,
- ein Steuergerät (13), das wenigstens eine Sensorinformation (vFz,ay,vGi) zum Zweck der Situationserkennung auswertet,
**gekennzeichnet durch**:
- eine Einrichtung (14) zur Ausgabe (2) eines Warnhinweises an den Fahrer bei Erkennen einer kritischen Schwingung, um den Fahrer zu einer Bremsung zu veranlassen,
- eine Sensorik (11) zum Überwachen (2) einer vom Fahrer ausgeübten Bremsbetätigung, und
- ein elektrisch ansteuerbares Bremssystem (10), das sofern der Fahrer eine Bremsung einleitet, zur Unterstützung des durch den Fahrer eingeleiteten Bremsvorgangs vom Steuergerät (13) automatisch derart angesteuert wird, dass eine Fahrzeugverzögerung zum Zwecke der Stabilisierung des Anhängers erreicht wird,
- wobei das Steuergerät (13) den Bremsdruck in Abhängigkeit vom Fahrervordruck und/oder vom Gradienten des Fahrervordrucks ermittelt.

7. Vorrichtung nach Anspruch 6, **dadurch gekennzeichnet, dass** der Rad-Bremsdruck innerhalb eines Bereichs (A,B) mittleren Fahrervordrucks auf einen vorgegebenen Sollwert (p_{So}) gesetzt und bei sehr hohen Fahrervordrücken (C) dem Fahrervordruck entspricht.

## Claims

1. Method for assisting a motor vehicle driver in the case of a rolling trailer, wherein an oscillation of the trailer is detected by evaluating at least one driving state variable (vFz, ay, vGi),
**characterized by** the following steps which are carried out by means of an algorithm in a control unit:
- outputting (2) of a warning message to the driver when a critical oscillation is detected, in order to cause the driver to brake,
- monitoring (3) of a brake activation carried out by the driver, and
- assisting (4) the driver, if he initiates a braking process, during the braking process initiated by the driver by automatically activating the vehicle brakes (10), wherein a brake pressure (Pso) with which a vehicle deceleration for the purpose of stabilizing the trailer is brought about is applied,
- wherein the brake pressure (Pso) which is set automatically to assist (4) the driver is determined as a function of the driver's admission pressure and/or the gradient of the driver's admission pressure.

2. Method according to Claim 1, **characterized in that** the brake pressure (Pso) which is set automatically to assist (4) the driver is determined as a function of the driving situation (vFz, ay, vGi), preferably the speed of the vehicle or the degree of oscillation of the trailer.

3. Method according to one of the preceding claims, **characterized in that** depending on the degree of oscillation of the trailer either no action (3) is carried out, a warning message (2) is output to the driver or an automatic braking operation (5) is initiated immediately.

4. Method according to one of the preceding claims, **characterized in that** in order to detect (1) oscillation of a trailer the yaw rate (vGi) and/or the lateral acceleration of the vehicle are evaluated.

5. Method according to one of the preceding claims, **characterized in that** the method is carried out only above a predefined speed threshold (vFz).

6. Device for assisting the driver of a motor vehicle in the case of a rolling trailer, containing
- a sensor system (12) for detecting (1) a trailer oscillation,
- a control unit (13), which evaluates at least one sensor information item (vFz, ay, vGi) for the purpose of detecting a situation,
**characterized by**:
- a device (14) for outputting (2) a warning message to the driver when a critical oscillation is detected, in order to cause the driver to brake,
- a sensor system (11) for monitoring (3) a brake activation which is applied by the driver, and
- an electrically actuable brake system (10) which, if the driver initiates a braking operation, is automatically actuated by the control unit (13) in order to assist the braking operation initiated by the driver, in such a way that a vehicle deceleration for the purpose of stabilizing the trailer is brought about,
- wherein the control unit (13) determines the brake pressure as a function of the driver's admission pressure and/or the gradient of the driver's admission pressure.

7. Device according to Claim 6, **characterized in that** the wheel brake pressure is set to a predefined setpoint value (pₛₒ) within a range (A, B) of medium driver's admission pressure, and in the case of very high driver's admission pressures (C) the wheel brake pressure corresponds to the driver's admission pressure.

## Revendications

1. Procédé pour assister le conducteur d'un véhicule automobile lorsqu'une remorque effectue un mouvement de roulis, une oscillation de la remorque étant détectée en interprétant au moins une grandeur d'état de la conduite (vFz, ay, vGi),
**caractérisé par** les étapes suivantes, exécutées dans un module de commande au moyen d'un algorithme :
- émission (2) d'une notification d'alerte au conducteur lors de la détection d'une oscillation critique afin d'inciter le conducteur à freiner,
- surveillance (3) d'un actionnement des freins effectué par le conducteur et
- assistance (4) du conducteur, dans la mesure où il initie un freinage, lors de l'opération de freinage initiée par le conducteur par un actionnement automatique des freins de véhicule (10), une pression de freinage (Pso) étant exercée, laquelle permet d'obtenir un ralentissement du véhicule à des fins de stabilisation de la remorque,
- la pression de freinage (Pso) réglée automatiquement pour l'assistance (4) du conducteur étant déterminée en fonction de la pression initiale du conducteur et/ou du gradient de la pression initiale du conducteur.

2. Procédé selon la revendication 1, **caractérisé en ce que** la pression de freinage (Pso) réglée automatiquement pour l'assistance (4) du conducteur est déterminée en fonction de la situation de conduite (vFz, ay, vGi), de préférence de la vitesse du véhicule ou de l'intensité de l'oscillation de la remorque.

3. Procédé selon l'une des revendications précédentes, **caractérisé en ce que** suivant l'intensité de l'oscillation de la remorque, soit aucune action (3) n'est accomplie, soit une notification d'alerte (2) est émise à l'attention du conducteur, soit un freinage automatique (5) est initié immédiatement.

4. Procédé selon l'une des revendications précédentes, **caractérisé en ce que** la vitesse de lacet (vGi) et/ou l'accélération transversale du véhicule sont interprétées pour la détection (1) d'une oscillation de la remorque.

5. Procédé selon l'une des revendications précédentes, **caractérisé en ce que** le procédé n'est mis en oeuvre qu'au-dessus d'un seuil de vitesse prédéfini (vFz).

6. Dispositif pour assister le conducteur d'un véhicule automobile lorsqu'une remorque effectue un mouvement de roulis, comprenant
- un dispositif de détection (12) pour détecter (1) une oscillation de la remorque,
- un module de commande (13) qui interprète au moins une information de détecteur (vFz, ay, vGi) en vue de reconnaître la situation,
**caractérisé par** :
- un dispositif (14) pour émettre (2) une notification d'alerte au conducteur lors de la détection d'une oscillation critique afin d'inciter le conducteur à freiner,
- un dispositif de détection (11) pour surveiller (3) un actionnement des freins effectué par le conducteur et
- un système de freinage (10) à commande électrique qui, dans la mesure où le conducteur initie un freinage, est commandé automatiquement par le module de commande (13) pour assister l'opération de freinage initiée par le conducteur de manière à obtenir un ralentissement du véhicule à des fins de stabilisation de la remorque,
- le module de commande (13) déterminant la pression de freinage en fonction de la pression initiale du conducteur et/ou du gradient de la pression initiale du conducteur.

7. Dispositif selon la revendication 6, **caractérisé en ce que** la pression de freinage de roue à l'intérieur d'une plage (A, B) de pression initiale moyenne du conducteur est fixée à une valeur de consigne prédéfinie (pso) et correspond à la pression initiale du conducteur dans le cas des pressions initiales du conducteur (C) très élevées.
